Europäisches Patentamt

European Patent Office

Office européen des brevets

(19)

(11) Veröffentlichungsnummer: **0 010 292 B1**

(12) **EUROPÄISCHE PATENTSCHRIFT**

(45) Veröffentlichungstag der Patentschrift: **16.02.83**

(51) Int. Cl.³: **B 60 T 13/12,** B 60 T 11/10

(21) Anmeldenummer: **79103997.7**

(22) Anmeldetag: **16.10.79**

(54) **Hydraulische Bremsanlage für Traktoren.**

(30) Priorität: **23.10.78 DE 2846067**

(43) Veröffentlichungstag der Anmeldung:
**30.04.80 Patentblatt 80/9**

(45) Bekanntmachung des Hinweises auf die Patenterteilung:
**16.02.83 Patentblatt 83/7**

(84) Benannte Vertragsstaaten:
**AT FR GB IT**

(56) Entgegenhaltungen:
**DE - A - 2 061 045
DE - A - 2 404 519
DE - A - 2 733 189**

(73) Patentinhaber: **FRITZMEIER AG
CH-5600 Lenzburg (CH)**

(72) Erfinder: **Muncke, Ludwig
Müller Thurgau Weg 11
D-8770 Lohr/Main (DE)**

(74) Vertreter: **Tiedtke, Harro, Dipl.-Ing. et al,
Patentanwaltsbüro Tiedtke-Bühling-Kinne- Grupe-
Pellmann Bavariaring 4
D-8000 München 2 (DE)**

Courier Press, Leamington Spa, England.

Die Erfindung bezieht sich auf eine hydraulische Bremsanlage für Traktoren gemäß dem Oberbegriff des Patentanspruchs 1.

Bei einer bekannten Bremsanlage dieser Art, wie sie beispielsweise aus der DE—OS 2 404 519 hervorgeht, erfolgt der Druckaufbau im Anhängerbremskreis über ein vom Druck im Traktor-Bremskreis angesteuertes Bremsventil, das in Abhängigkeit von der Druckerhöhung im Hauptbremszylinder einen zunehmenden Druckmittelstrom aus einem mehrere Verbraucher versorgenden Hochdruck-Fluidkreislauf in den Anhänger-Bremskreis abzweigt. Auf diese Weise wird die vorhandene Energie im Hochdruck-Fluidkreis wirksam zum Druckaufbau im Anhänger-Bremskreis herangezogen, wodurch sich der Vorteil ergibt, daß der Hauptbremszylinder mit einer kleineren Kapazität versehen werden kann. Der Druckaufbau im Traktor-Bremskreis erfolgt bei dieser bekannten Bremsanlage hingegen allein durch den Hauptbremszylinder, der keinerlei Servounterstützung erfährt.

Der Erfindung liegt deshalb die Aufgabe zugrunde, eine Bremsanlage für Traktoren gemäß dem Oberbegriff des Patentanspruchs 1 derart weiterzubilden, daß auf einfache Weise der im Anhänger-Bremskreis wirksame Druck zur Bremskraftunterstützung im Traktor-Bremskreis herangezogen werden kann.

Diese Aufgabe wird durch die im kennzeichnenden Teil des Patentanspruchs 1 angegebenen Merkmale gelöst.

Erfindungsgemäß wird das ohnehin vorhandene Energiepotential der Hydraulikanlage eines Traktors als Kraftquelle zur Unterstützung des Traktor-Bremskreises herangezogen. Übliche Traktoren besitzen eine Hydraulikanlage, deren Arbeitsdruck mindestens 120 bar beträgt. Dieser Arbeitsdruck kann daher bei entsprechender Dosierung ohne weiteres zur Servounterstützung des Traktor-Bremskreises herangezogen werden, dessen Druckniveau bei ca. 5 bar liegt. Dabei kann eine derartige Servounterstützung sowohl aus einem für den Anhänger-Bremskreis wirksamen Gleichstrom- oder auch Gleichdruckkreis gewonnen werden.

Die Erfindung wird im Folgenden anhand einer schematischen Zeichnung näher erläutert.

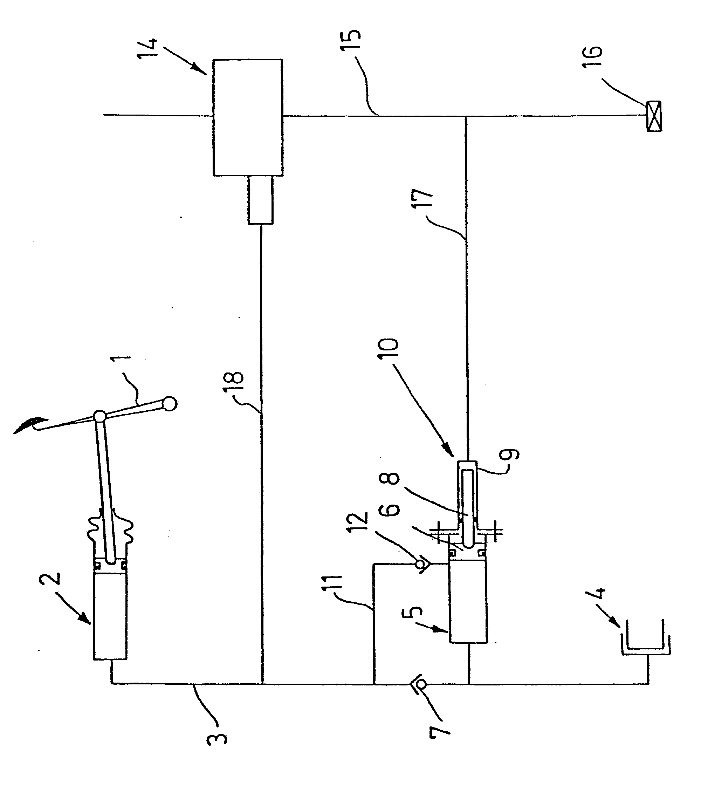

Die Figur zeigt einen durch ein Bremspedal 1 zu betätigenden Hauptbremszylinder 2, der über eine Bremsleitung 3 die Traktorbremsen 4 speist. Der Bremsleitung 3 ist ein Zusatz-Bremszylinder 5 parallelgeschaltet, dessen Kolben 6 auf der Kolbenvorderseite über eine Bremsleitung 3 unter Zwischenschaltung eines Rückschlagventils 7 beaufschlagt ist. Der Kolben 6 ist auf seiner Rückseite mit Hilfe seiner Kolbenstange 8 in einem im Querschnitt kleineren Zylinder 9 geführt, der mit der Kolbenstange einen Servozylinder 10 bildet. Auf der Vorderseite des Kolbens 6 ist sein zusatz-Bremszylinder 5 über eine Rücklaufleitung 11 vor dem Rückschlagventil 7 an die Bremsleitung 3 angeschlossen. Die Rücklaufleitung 11 enthält ebenfalls ein Rückschlagventil 12 und mündet so in den zusatz-Bremszylinder, daß sie beim Einleiten des Bremsvorgangs vom Kolben 6 gesperrt wird.

Jeder Traktor besitzt eine Hydraulikanlage zur Speisung anschließbarer Arbeitsmaschinen sowie zur Speisung auch einer Anhängerbremsanlage, wobei der Anhängerbremskreis ein Gleichdruck- oder ein Gleichstremkreis sein kann, der über ein Bremsventil 14 vorgesteuert wird, das den Bremsdruck über eine Druckleitung 15 zu einer Kupplung 16 zu den Anhängerbremsen freigibt. Diese Druckleitung 15 ist über eine Abzweigung 17 an den Servozylinder 10 angeschlossen. Das Bremsventil 14 wird im vorliegenden Fall über die Leitung 18 und einen vorgeschalteten Geber von der Bremsleitung 3 aus betätigt.

Beim Treten des Bremspedals 1 werden über die Bremsleitung 3 die Traktorbremsen 4 unmittelbar beaufschlagt. Gleichzeitig wird über die Leitung 18 das Bremsventil 14 betätigt und dadurch die Druckleitung 15 zu den Anhängerbremsen beaufschlagt, wodurch der Servozylinder 10 den Kolben 6 in der Zeichnung nach links beansprucht und die Bremswirkung des Hauptbremszylinders 2 unterstützt. Da der Druck der Bremsleitung 3 bei etwa 5 bar, derjenige in der Druckleitung 15 üblicherweise entsprechend der Auslegung der Hydraulikanlage des Traktors bei mindestens 120 bar liegt, ist bei entsprechender Bemessung der Querschnittsfläche von zusatz-Bremszylinder 5 und Servozylinder 10 jegliche erwünschte Servowirkung erreichbar.

Beim Lösen der Bremsen erfolgt der Rücklauf von den Bremsen zum Hauptbremszylinder bei entlastetem Servozylinder über die Rücklaufleitung 11. Wird der Hauptbremszylinder 2 vom Bremspedaldruck entlastet, entspannt sich auch der Druck auf den Geber des Bremsventils 14, so daß gleichzeitig ein Abbau des Drucks auf den Servozylinder 10 und damit auf den zusatz-Bremszylinder 5 erfolgt. Damit gehen alle Kolben zurück und ein eventueller Restdruck entlastet sich über das Rückschlagventil 17 in die Rücklaufleitung 11.

## Patentansprüche

1. Hydraulische Bremsanlage für Traktoren mit einem selbständigen Bremskreis mit einem Hauptbremszylinder (2) und einer Bremsleitung (3) zu den Traktorbremsen (4) und einem über die Hydraulikanlage des Traktors gespeisten Anhängerbremskreis, dessen Druckleitung (15) zu den Anhängerbremsen über ein mit dem Bremspedal (1) des Traktors gekoppeltes Bremsventil (14) gespeist wird, dadurch gekennzeichnet, daß der vom Hauptbremszylinder (2) des Traktors beaufschlagten Bremsleitung (3) ein Zusatzbremszylinder (5) parallelgeschaltet ist, dessen Kolben (6) auf der Vorderseite über ein Rückschlagventil (7) durch den Druck in der Bremsleitung (3) und auf der Rückseite über einen durch die Druckleitung (15) gespeisten Servozylinder (10) beaufschlagt ist, wobei der Rücklauf zu der Bremsleitung (3) über den der Kolbenvorderseite zugewandten Zylinderteil des Bremszylinders (5) erfolgt, und wobei dieser Zylinderteil über eine vom Kolben (6) beim Bremsvorgang gesperrte Rücklaufleitung (11) an die Bremsleitung (3) angeschlossen ist.

2. Bremsanlage nach Anspruch 1, dadurch gekennzeichnet, daß sich die wirksame Kraft auf der Seite des Servozylinders zu derjenigen auf der Vorderseite des Bremszylinders wie 1:4 bis 1:8 verhalten.

## Revendications

1. Système de freinage hydraulique pour tracteurs, comprenant un circuit de freinage indépendant avec un cylindre de frein principal (2) et une conduite de frein (3) pour les freins de tracteur (4), et un circuit de freinage de remorque alimenté par le système hydraulique du tracteur, la conduite de pression (15) duquel circuit de freinage de remorque étant alimentée via un robinet de freinage (14) lié avec le pédale du frein (1) du tracteur, caractérisé par le fait qu'un cylindre de frein additionnel (5) est conjugué en parallèle avec la conduite de frein (3) alimentée par le cylindre de frein principal (2) du tracteur, le piston (6) duquel cylindre (5) étant chargé à son côté avant via une soupape de retenue (7) par la pression dans la conduite de frein (3) et à son côté arrière par un servo-cylindre (10) alimenté par la conduite de pression (15), le reflux dans la conduite de frein (3) étant éffectué via cette part de cylindre du cylindre de frein (5) qui est tournée vers la face du piston (6), cette part de cylindre étant en communication avec la conduite de frein (3) via une conduite de reflux (11) qui est barrée par le piston (6) pendant l'action de freinage.

2. Système de freinage selon revendication 1, caractérisé par le fait que la valeur du rapport de la force effective au côté du servo-cylindre (10) à la force à la tête du cylindre de frein (5) est dans une région de 1:4 à 1:8.

## Claims

1. Hydraulic brake system for tractors, comprising an independent brake circuit with a main brake cylinder (2) and a brake pipe (3) for the tractor brakes (4), and a trailer brake circuit supplied by the hydraulic system of the tractor, the pressure pipe (15) of said trailer brake circuit leading to the trailer brakes being supplied via a brake valve (14) which is coupled to the brake pedal (1) of the tractor, characterized in that an additional brake cylinder (5) is connected in parallel with the brake pipe (3) supplied by the main brake cylinder (2) of the tractor, the piston (6) of said additional brake cylinder being loaded at its front side via a check valve (7) by the pressure in the brake pipe (3) and at its back side by a servo cylinder (10) supplied by the pressure pipe (15), with the return flow to the brake pipe (3) being effected via the cylinder part of the brake cylinder (5) facing the piston front side, and with said cylinder part being connected to the brake pipe (3) via a return flow pipe (11) which is closed by the piston during braking operation.

2. Hydraulic brake system according to claim 1, characterized in that the value of the ratio between the effective force at the side of the servo cylinder (10) and the force acting at the front side of the brake cylinder (5) is in the range from 1:4 to 1:8.